# EUROPEAN PATENT APPLICATION

(11) **EP 1 089 403 A1**
(43) Date of publication of application: **04.04.2001**
(21) Application number: 99830608.8
(22) Date of filing: 28.09.1999
(51) Int. Cl.: H01S 3/08, H01S 3/115

(54) **Single longitudinal mode Q-switched laser**

(71) Applicant: Enel Societa'per Azioni, 00198 Roma (IT)
(72) Inventor: Brioschi, Franco Enrico, 20050 Correzzana (MI) (IT)
(74) Representative: Mittler, Enrico

(57) **Abstract**

Electro-optical Q-switch system for a solid-state laser source operating on longitudinal single mode and having as active medium a solid-state material rod (7). The Q-switch system comprising a polarizer (1), an electro-optical actuator (2) of a Pockels cell type operating at λ/4 and a quarter-wave plate (3). The active material rod (7) is interposed between the quarter-wave plate (3) and the electro-optical actuator (2).

## Description

The present invention relates to an electro-optical Q-switch system for eliminating the spatial "hole-burning" phenomenon in solid-state lasers operating on longitudinal single mode.

Currently solid-state laser sources operating on longitudinal single mode are known, which employ a so-called Q-switch system in order to generate laser radiation pulses of short duration, particularly from a few nanoseconds to a few tens of nanoseconds.

Such a "Q-switched" laser source, that is comprising a Q-switch system, includes, for example, two mirrors ( output coupler and high reflectivity back mirror) forming a resonator, a "Q-switch" apparatus and an active medium formed by a solid-state material rod and a pump system associated thereto. A rod of the above type is described, for example, in W. Koechner - Solid-State Laser Engineering 3rd ed., Springer-Verlay, cap. 2.

A phenomenon existing in laser sources of the above type which operate on longitudinal single mode is one called "spatial hole-burning". This phenomenon is due to formation, by the laser radiation oscillating on longitudinal single mode, of a electromagnetic field which is not uniformly distributed along the rod's axis because of the formation of a standing wave pattern in the rod. In this case a large part of the energy stored in the rod is left available for the oscillation of another longitudinal mode (at different frequency), the standing wave pattern of which fills the holes of the other. Therefore, a given number of different longitudinal modes can reach the oscillation threshold thereby resulting in a larger output bandwidth. In this condition the triggering of the laser oscillation on longitudinal single mode results difficult any technique is adopted.

To avoid this, some more or less valid solutions have been proposed.

A common solution provides to insert two quarter-wave plates in the resonator cavity, at each end of the rod, according to the scheme originally proposed in "A "Twuisted-Mode" Technique for Obtaining Axially Energy Density in a Laser Cavity", V. Evtuhov and E. Siegman, Applied Optics, vol. 4, n. 1, pp 142-143, January 1965 and which then has been diffused largely. The two quarter-wave plates convert the polarization of the forward and backward traveling waves in the rod to circular polarization. The circularly polarized waves can be seen as superimposition of two linearly polarized waves which are displaced by λ/4 with respect to each other. This produces an electromagnetic field distributed uniformly along the rod's axis. In this way, the "hole-burning" phenomenon is prevented and the oscillation on longitudinal single mode is easier.

However, the introduction of two quarter-wave plates increases the fore and back losses of the laser beam, thus lowering the configuration efficiency.

In view of the state of the art described, it is an object of the present invention is to provide an electro-optical Q-switch system which allows to easily erase the spatial "hole-burning" phenomenon in solid-state lasers operating on longitudinal single mode, keeping simultaneously an high efficiency.

According to the present invention, such object is attained by an electro-optical Q-switch system for a solid-state laser source operating on a longitudinal single mode and having as active medium a solid-state material rod, said Q-switch system comprising a polarizer, an electro-optical actuator of a Pockels cell type operating at λ/4 and a quarter-wave plate, characterized in that said active material rod is interposed between said quarter-wave plate and said electro-optical actuator.

A Pockels cell is described for example in W. Koechner - Solid-State Laser Engineering 3rd ed., Springer-Verlay, cap. 8, par. 8.3.

Thanks to the present invention it is possible to form an electro-optical Q-switch which prevents the "spatial hole-burning" phenomenon even without further quarter-wave plates placed at each end of the rod.

The features and the advantages of the present invention will be made evident by the following detailed description of an embodiment thereof, illustrated as not limiting example in the annexed drawings, wherein:
Figure 1 is a schematic view of a resonator cavity comprising a "Q-switch" component configuration according to prior art;
Figure 2 is a schematic view of a resonator cavity comprising a "Q-switch" component configuration according to invention;
Figure 3 is a schematic view of a possible laser source with a resonator cavity employing the component configuration of figure 2.

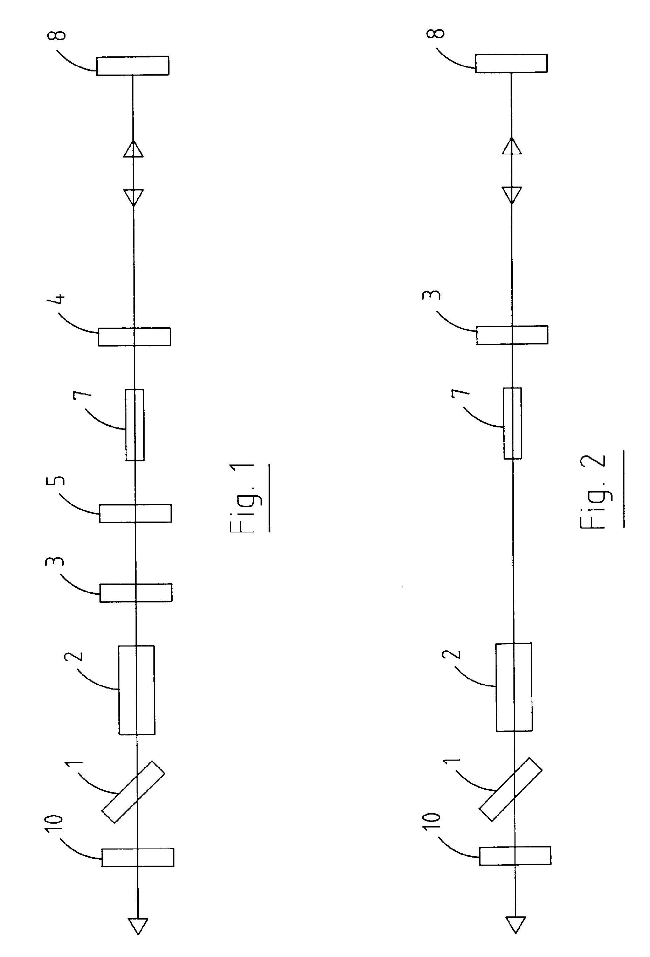

In figures 1 and 2 a "Q-switch" apparatus according to the prior art and a "Q-switch" apparatus according to invention are shown inside a resonator cavity of a laser source, both representing a very fast electro-optical shutter which is opened only at the end of the pump period, when the gain of the active material of the laser reaches its maximum, thereby determining a Q-switch and also causing the laser radiation emission on a single short and intense pulse. Both such apparatuses comprise a polarizer 1, an electro-optical actuator of the type known as a Pockels cell 2, and a quarter-wave plate 3.

When the "Q-switch" apparatus is opened, that is it passes the laser radiation, the radiation oscillation between two mirrors is allowed and consequently its amplification at each passage through the rod. The laser radiation emission in the shape of a short duration pulse is achieved.

In figure 1 relating to prior art, the laser radiation polarized linearly from the polarizer 1 passes through the Pockels cell 2 and the quarter-wave plate 3 of the "Q-switch" apparatus and then through other two quarter-wave plates 5 and 4 between which a rod 7 made by solid-state active material, particularly Nd:YAG, is interposed. The beam hits a high reflectivity mirror 8 and comes back to hit a partial reflection output mirror 10.

In figure 2 relating to present invention, the active material rod 7 is comprised in the "Q-switch" apparatus and the laser radiation, polarized linearly from the polarizer 1 and passed through the Pockels cell 2, passes through the rod 7 and then hits the quarter-wave plate 3. The Pockels cell 2 operates in quarter-wave mode, that is it behaves like a usual quarter-wave plate. Therefore during the laser oscillation two quarter-wave plates are present in the resonator cavity and the "spatial hole-burning" phenomenon can be avoided simply by placing the active material rod 7 between such two plates 2 and 3. Alternatively, the position of the plate 3 and the Pockels cell 2 can be unchanged by placing one in the place of the other, without the reached result loosing validity. Then the beam hits the high reflectivity mirror 8 and comes back to hit a partial reflection output mirror 10.

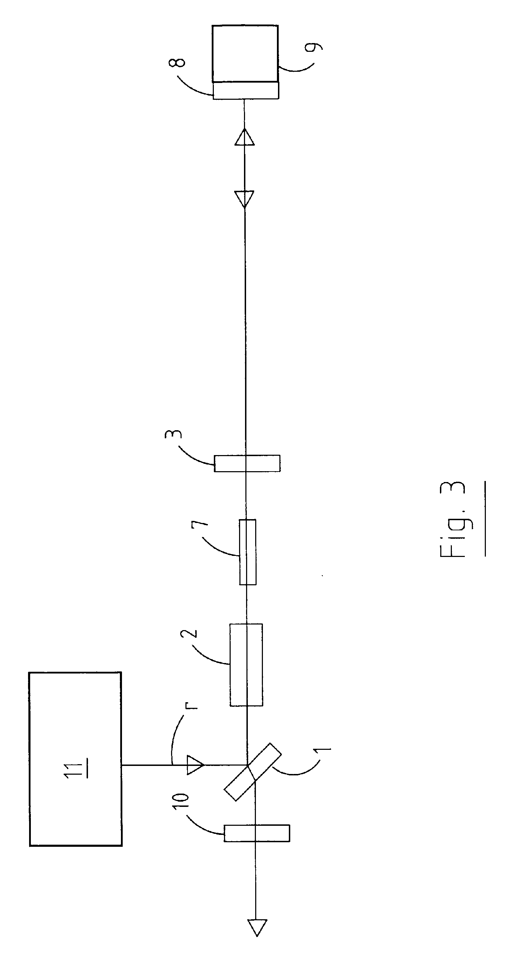

In figure 3 a exemplifying scheme is shown of a possible laser source employing the above described "Q-switch" apparatus of figure 2.

A block 11 comprising a continuous wave, low power, injection seeding laser, which operates on longitudinal single mode, irradiates a light beam r which is made collimate and is injected into a resonator cavity having a component configuration as that is described in figure 2.

In this case the mirror 8 is associated to a piezo electric actuator 9 which regulates the distance between the mirrors 8 and 10, in order to make that such distance is a multiple of half a wavelength of the injected radiation r, so as to assist the injection process.

## Claims

1. Electro-optical Q-switch system for a solid-state laser source operating on longitudinal single mode and having as active medium a solid-state material rod (7), said Q-switch system comprising a polarizer (1), an electro-optical actuator (2) of a Pockels cell type operating at λ/4 and a quarter-wave plate (3), characterized in that said active material rod (7) is interposed between said quarter-wave plate (3) and said electro-optical actuator (2).

2. Resonator cavity of a solid-state laser source operating on longitudinal single mode and having as active medium a solid-state material rod (7) and an electro-optical Q-switch system comprising an electro-optical actuator (2) of a Pockels cell type operating at λ/4 and a quarter-wave plate (3), characterized in that said active material rod (7) is interposed between said quarter-wave plate (3) and said electro-optical actuator (2) of said electro-optical Q-switch system.

3. Resonator cavity according to claim 2, characterized in that said electro-optical Q-switch system and said rod (7) are interposed between a high reflectivity mirror (8) and an output mirror (10) which are placed on optical axis passing on their focuses and the focuses of the rod (7).
